# EUROPEAN PATENT SPECIFICATION

(11) **EP 2 581 610 B1**
(45) Date of publication and mention of the grant of the patent: **12.08.2015**
(21) Application number: 12172609.5
(22) Date of filing: 19.06.2012
(51) Int. Cl.: A63C 11/22, F16B 7/14

(54) **Mechanical assembly for the connection between two modular elements of telescopic poles for practicing sport, spare time activities and the like and telescopic poles for the practicing sport, spare time activities and the like provided with such a mechanical assembly**
Mechanische Baugruppe zur Verbindung zwischen zwei modularen Elementen teleskopischer Stangen zum Praktizieren von Sport, Freizeitaktivitäten und dergleichen, und teleskopische Stangen zum Praktizieren von Sport, Freizeitaktivitäten und dergleichen mit einer solchen mechanischen Baugruppe
Ensemble mécanique pour le raccordement entre deux éléments modulaires de montants télescopiques pour pratiquer un sport, des activités de temps libre et similaires et montants télescopiques pour la pratique du sport, des activités de temps libre et analogues équipés d'un tel ensemble mécanique

(30) Priority: 12.10.2011 IT VI20110272
(43) Date of publication of application: 17.04.2013
(73) Proprietor: Fizan S.r.l., 36027 Rosa (VI) (IT)
(72) Inventor: Zaltron, Andrea, I-36027 Rosà (VI) (IT)
(74) Representative: Contadin, Giorgio

(56) References cited:
- FR-A- 984 264
- FR-A1- 2 600 197
- GB-A- 2 409 009
- US-A1- 2009 008 213
- US-A1- 2011 013 980

## Description

The present invention relates to a mechanical assembly for the connection between two modular elements of telescopic poles for practicing sport, spare time activities and the like. The invention here also concerns a telescopic pole for practicing sport activities (such as alpine skiing, cross country skiing, acrobatic skiing - so called "free styling" - ski touring), spare time activities (such as trekking, "Nordic walking"), fitness and/or wellness activities with invigorating-therapeutic purposes, leisure activities or for simply completing walks or similar, provided with such a mechanical assembly.

However, this does not exclude that the mechanical assembly and the telescopic pole of the invention may be intended for other uses such as, for example, the execution of domestic activities, where they form extendable brooms for cleaning narrow or difficult to be accessed angles of the rooms of the housing build.

More particularly, the solution according to the invention is inserted into the field of sport equipment for activities not only at open air, but also at the gym, and it precisely refers to a mechanical assembly for the connection between two modular elements of telescopic poles for alpine skiing, cross country skiing, ski touring, acrobatic ski, walking, hiking or Nordic walking.

Still more in detail, the present invention relates to a mechanical assembly for the connection between two modular, generally tubular, elements of telescopic poles for practicing sport, spare time activities or the like equipped with an elastic structure formed monolithically.

As known, in practicing some sport, spare time activities or hiking at open air it is useful to avail oneself of the aid of a pair of poles to be handled with the hands, for example as support and balance for own body in positions of unstable equilibrium or along impervious paths that make it impossible or at least difficult to keep a substantially erect posture.

These telescopic poles, marked by their own weight and height, can be rented or loaned to several users, wherefore it can be often useful to adjust the length thereof in order to make them suitable for use by users of different height.

The length of the telescopic poles concerned can also be adjusted as a function of the fact that the user is walking downhill or uphill.

For these reasons telescopic poles adjustable in height on the basis of the user's needs are commercially available.

Adjustment takes place by means of various connection systems which allow, during use, to keep firmly together, in the desired position, the component modular, generally both tubular although one of them can be also non-tubular in certain embodiments, elements of the telescopic poles.

Some of said known solutions provide mechanical connection assemblies comprising a plurality of elements which include:
- a clamp equipped with an elastic tubular element, having a slot parallel to the axis of the pole and defining two ends;
- a screw which connects these ends of the slit.

By tightening the screw, the ends of the slit approach each other, annulling the slit and - therefore - increasing the seal on the two modular (tubular or non-tubular) elements to be connected, while, on the contrary, by loosening the screw, the ends move away each other reviving the slit.

The screw includes grasping means with semicircular-shaped lever, in such a way that it can be easily handled during the rotary movement, and then it is tightened around the tubular element, further increasing the close on it thanks to the lever.

Therefore, these mechanical connection assemblies of known type present disadvantageously a very complex and articulated structure, which must possess the necessary elasticity to come back from the seal position to the release position and vice versa, so as to adjust the length of the telescopic pole whenever necessary.

This constructive complexity reflects disadvantageously in a difficulty of manufacture, and in the need to manage at stock a still high number of components, and, accordingly, as a consequence, to assemble them together in order to get the finished product.

Another drawback of the known art is due to the fact that the operative interaction between the various pieces constituting the mechanical assembly involves a reciprocal continuous friction.

In other words, the elements of the mechanical connection assembly of known type here examined and concerned are subject to wear over time, under continuous use.

Another drawback of the known solutions of the mechanical connection assemblies concerned, comprising several pieces, is determined by the fact that the plurality of components, beyond to increase their weight, with the time increases the possibility of breakage, but most of all sometimes causes troublesome vibrations during use.

Another drawback of the prior art is due to the fact that, in case the screw is insufficiently tight, for example by a user having limited force, such as a woman or a child, the mechanical assembly is disadvantageously not able to guarantee the seal and risks to cause collapsing of a tubular element inside the other as soon as a minimum force is exerted on the telescopic pole.

Furthermore, in case - on the contrary - an excessive force is applied, it is not possible to rotate the semicircular lever in order to limit its overall dimensions. This drawback can also be dangerous, since the semicircular lever, when in release position, can be accidentally struck by the user's legs while he walks, with the risk of causing always troublesome injuries or contusions.

Another drawback of the current state of the art is due to the fact that the operations of maintenance of the mechanical connection assembly are rather laborious since they necessarily provide for the removal and separation of all its removable components; in addition, in such a situation, it is also possible that one of these components of the mechanical assembly goes irreparably lost.

Furthermore, by providing a greater number of pieces, the allowable errors in dimensioning the various components add each other, and it is possible that this sum makes necessary the use of two tubular elements having a difference in diameter of some millimeters.

In such a case, the difference in diameter is so large as to make the telescopic pole, using such a mechanical connection assembly, almost unfit to hold the weight of a user during the practice of sport or spare time activities previously alluded.

Noteworthy, in this regard, patent documents of prior art known by the applicant, mainly the documents published as FR984264 A, US2009/008213 A1 and FR2600197 A1, which disclose mechanical connection assemblies for telescopic poles used in technical fields different from the practice of sport, spare time or recreation activities, in particular as support elements for cameras, microphones and spindles of the film and audiovisual sector, respectively.

The mechanical connection assembly of these documents of the prior art, both for the materials and the dimensions and most of all for the overall construction concept which it is made with, it is not in any way suitable to be used in telescopic poles for practicing sport, spare time activities and the like previously identified, since it causes a low minimum seal between the tubular modular elements of the telescopic poles themselves, which can be easily and inappropriately overcome by a typical force applied by the user who uses them for practicing sport, spare time activities and similar and, as already mentioned above, provoking the collapse of a tubular modular element in the other.

The present invention seeks to overcome the drawbacks of the prior art just mentioned.

In detail, main purpose of the present invention is to provide a mechanical assembly for the connection between two modular elements of telescopic poles comprising a number of operative components lower than that one of the equivalent known technique.

Another purpose of the present invention is to provide a telescopic pole for practicing sport, spare time activities or the like which is originally and effectively provided with a mechanical assembly of this type.

As part of these purposes, it is task of the present invention to facilitate the achievement of economies of scale and, therefore, a standardization and efficiency greater than the state of the art in the production of mechanical assemblies for the connection between two modular elements of telescopic poles.

It is a second task of the invention to reduce with respect to the prior art the number of item codes forming a finished product, such as a mechanical assembly for the connection between two modular elements of telescopic poles, to be managed at stock.

It is a further purpose of the invention to minimize the possible deterioration due to wear and the risks of loss of the operative components of a mechanical assembly for the connection between two modular elements of telescopic poles.

It is another task of the current invention to provide a telescopic pole for practicing sport, spare time activities and the like which, in the operating use configuration chosen for its modular elements, presents a high mechanical seal or resistance to the load applied by the person's body (such as a sportsman or an enthusiast of walks outdoors during spare time), however appropriate to the aforesaid types of use.

Yet another purpose of the invention is to concrete a mechanical assembly for the connection between two modular elements of telescopic poles having a simple use intuitive for anyone. It is a last but not least purpose of the invention to provide a mechanical assembly for the connection between two modular elements of telescopic poles which does not involve complex assembly operations, nor the use of special tools for its proper maintenance.

Said purposes are achieved by means of a mechanical assembly for the connection between two modular elements of telescopic poles for practicing sport, spare time activities or the like according to the attached claim 1, as hereinafter referred for the sake of exhibition brevity. Further technical features of detail of the mechanical assembly for the connection between two modular elements of telescopic poles of the invention are set forth in the related dependent claims.

Integral part of the present invention is also a telescopic pole for practicing sport, spare time activities and the like, comprising the abovementioned mechanical connection assembly according to the appended claim 15, as still hereinafter referred for the sake of exhibition brevity.

Advantageously, the mechanical connection assembly of the present invention is of simple construction and does not require any assembly, since its operative components include only two pieces.

Still advantageously, the invention allows to standardize the production of a mechanical assembly for the connection between two modular elements of telescopic poles, generating significant economies of scale that lead to an increase in production efficiency, and thus to a considerable saving of costs compared to the prior art.

Equally advantageously, the invention here concerned leads to a reduction over the prior art in the number of item codes forming a finished product to be managed at stock, with the benefits in logistics and management terms that this entails.

Another advantage of the present invention derives from the ease of the maintenance operations both of the mechanical connection assembly and, in return, the telescopic pole for practicing sport, spare time activities and the like which it is applied to.

Furthermore, the user advantageously does not risk losing some pieces and, therefore, being in an impervious environment with useless instruments, when the mechanical assembly and/or the related telescopic pole is for any reason disassembled and/or subjected to maintenance: this thanks to the fact that the grasping device of the mechanical assembly of the invention remains for a part - the elastically yielding portion - coupled with one of the modular elements of the telescopic pole while the remaining part - the cursor - is a single piece which can be easily handled for maintenance and hardly lost.

Again, wear of the components of the mechanical connection assembly of the present invention is reduced, the operative interaction between them being minimum. Advantageously, the telescopic pole of the invention, using the mechanical connection assembly always object of the invention, is able to very effectively bear the loads applied with his own body by the user while practicing sport, spare time, hiking activities and similar: laboratory tests performed by the applicant have shown that the telescopic pole of the invention keeps its structural and functional integrity even facing an applied load of at least 50 kg, aspect which significantly differentiates it from the mechanical assemblies of the prior art, such as those ones shown in the patent documents FR984264 A, US2009/008213 A1 and FR2600197 A1 totally unsuitable for the application which the present invention is intended to.

Said purposes and advantages, as well as others which will emerge below, will appear more evident from the following description, relating to preferred embodiments of the mechanical assembly for the connection between two modular elements of telescopic poles of the invention, given by indicative and illustrative, but not limitative, way with reference to the accompanying drawings, in which in particular:
- figure 1 is a partially sectioned side view of the mechanical connection assembly of the invention in applicative conditions, with an its first component - the cursor - in the rest position, vertically shifted with respect to other modular elements to be connected;
- figure 2 is a partially sectioned side view of the mechanical assembly of figure 1 in applicative conditions, with an its first component - the cursor - in the operating position;
- figure 3 is a partially sectioned side view of a first component - the cursor - of the mechanical assembly of figure 1;
- figure 4 is a partially sectioned side view of a second component - the elastically yielding portion - of the mechanical assembly of figure 1;
- figure 5 is a partially sectioned side view of a first possible executive variant of the second component of figure 4;
- figure 6 is a plan view of figure 5.

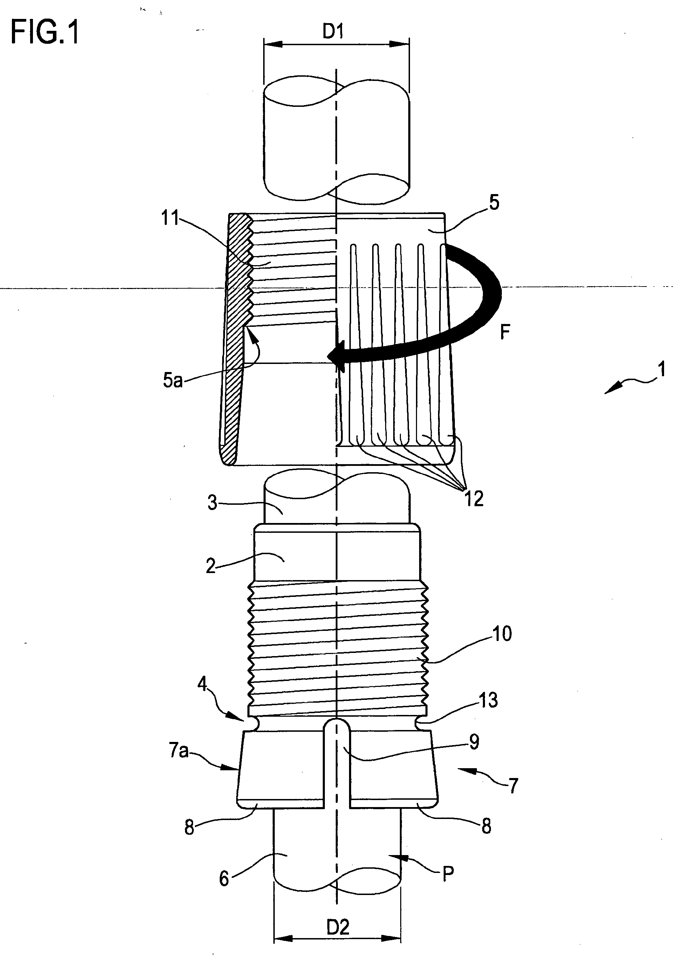

With reference to the attached figures 1-4, the mechanical assembly of the invention, used for the connection of two modular elements of telescopic poles, is globally indicated with 1.

As it can be seen, the mechanical connection assembly 1 includes a grasping device 2, fixed externally and directly, for example by gluing, to the outer surface P and at an end 4 of a first tubular modular element 3, having a first diameter D1, of telescopic pole (rod).

In turn, the grasping device 2 includes, in addition, a cursor 5 longitudinally movable along the axis of the first modular element 3.

A second tubular modular element 6, having a diameter D2<D1 and to be telescopically connected with the first modular element 3, is positioned inside the first element 3 itself and is able to get out of it at least partially at its end 4.

The grasping device 2 presents at least an elastically yielding portion 7, made of elastic material, which is able to pass from a first rest position, in which such an elastically yielding portion 7 is extended and released, to an operating position, in which the elastically yielding 7 portion itself is compressed.

The elastically yielding portion 7 of the grasping device 2 protrudes from the end 4 of the first modular element 3, in such a way as to block the movement of the second modular element 6 with respect to the first element 3, when such a grasping device 2 is in operating position, and let it slide when the grasping device 2 is in its rest position.

In a preferred but not exclusive manner, the cursor 5 is for example made of metallic material such as aluminum and presents a substantially tubular shape: it is free to move along the first modular element 3, from and to its end 4.

Furthermore, the cursor 5 presents an inner shape corresponding to the outer shape of the entire grasping device 2 when the elastically yielding portion 7 assumes the operating position.

More in detail, the cursor 5 is able to slide also along the grasping device 2, at least partially overlapping to it.

As the cursor 5 approaches to the elastically yielding portion 7 of the grasping device 2, such an elastically yielding portion 7 compresses around the second modular element 6, preventing its sliding inside the first modular element 3.

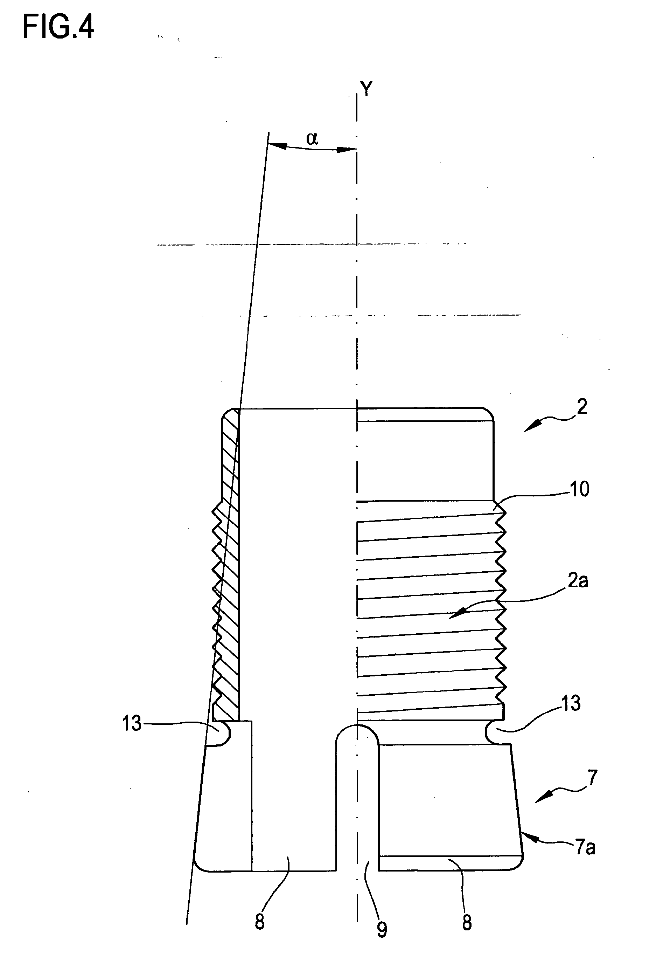

As better highlighted in figure 4, in a preferred embodiment of the invention, the elastically yielding portion 7 includes two or more lobes 8, separated each other by at least an opening 9 in such a way that the lobes 8 themselves can approach each other compressing around the second modular element 6 under the pressure exerted on them by the cursor 5.

In any case, it is preferable that the overall shape of the elastically yielding portion 7 of the grasping device 2 is larger than the inner one of the cursor 5, so that the cursor 5 is able to compress it gradually, as it approaches in order to arrange it, at the end, in the operating position.

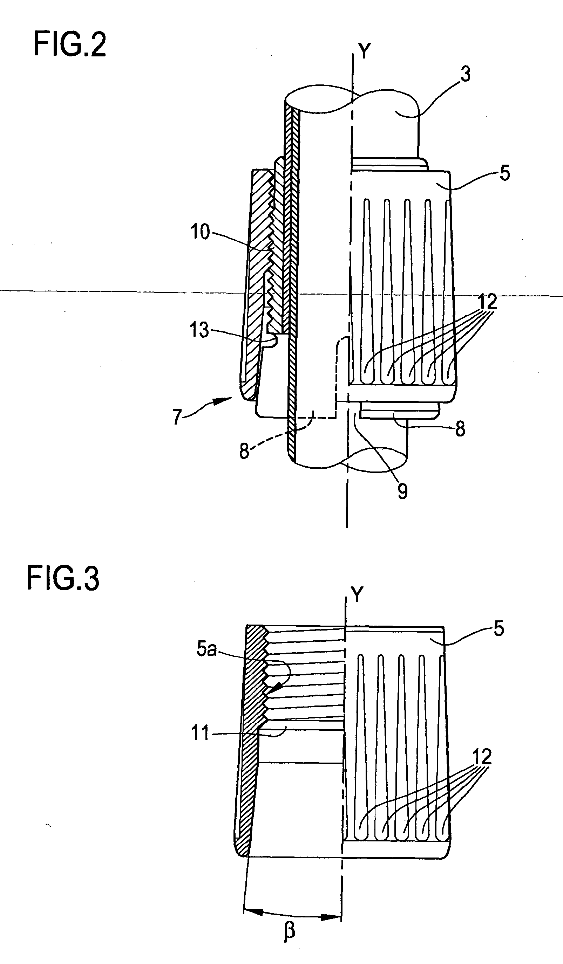

For example, the overall shape of the elastically yielding portion 7 is in this case substantially frusto-conical with an inclination of the outer wall 7a of a first angle α with respect to the axis of the linear modular elements 3 and 6, and the inner shape of the cursor 5 presents, always with respect to said linear axis Y of the modular elements 3 and 6, an inclination of the inner wall 5a of a second angle β (visible in figure 3), greater than the first angle α.

In detail, at purely preferred and non-binding way, the first angle α can assume a value of 85° with respect to the axis of the modular elements 3 and 6 of the telescopic pole.

In essence, then, the elastically yielding portion 7 presents an outer wall 7a arranged along a sloped plane diverging outwardly with respect to the linear axis Y defined by the modular elements 3 and or, to be more exact, by the grasping device 2: contrary to what is shown by the prior art closest to the technical subject-matter of the invention, mainly the patent documents FR984264 A, US2009/008213 A1 and FR2600197 A1, this allows the lobes 8 of the elastically yielding portion 7 to be circumferentially compressed on the second modular element 6 under the action of the cursor 5 that places the elastically yielding portion 7 itself in the operating position, actually performing a high gripping action or mechanical seal that allows the mechanical assembly 1 to effectively and stably connect together the modular elements 3 and 6 of a telescopic pole.

According to the invention, the grasping device 2 presents on its outer surface 2a a linear guide 10 along which the cursor 5 slides.

As the cursor 5 is pushed downwardly by the user, the elastically yielding portion 7 of the grasping device 2 is compressed in the operating position, ensuring seal on the second modular element 6.

In case in which the mechanical connection assembly 1 of the invention is applied to a telescopic pole for practicing sport, spare time activities and the like, such a seal, indeed, is proportional to the weight of the user who performs the thrust on the cursor 5: a skinny, weak or minute user will be able to exert a clamping action of lower intensity, but he will also imply a lower weight to be supported for the telescopic pole, avoiding its accidental, uncontrolled and dangerous collapse.

A more handsome user - and who requires a greater force in the telescopic pole in order to support his own body - will be able to greatly tighten or clamp the cursor 5, so that the elastically yielding portion 7 exerts a greater grip on the second modular element 6. Furthermore, since the cursor 5 slides always being adherent to the modular elements 3 and 6 of the telescopic pole, a possibly excessive thrust on such a cursor 5 that does not prevent a correct use of the pole itself.

In particular, the linear guide 10 presents first end-of-stroke means in such a way that the cursor 5 remains always at least partially superimposed on the grasping device 2, so as not to spread into the environment.

In this case, preferably but not necessarily, the first end-of-stroke means are at least partly defined, in natural and spontaneous way, by the own pressure with which the user stably couples the cursor 5 with the elastically yielding portion 7, compressing the first on the second: this pressure is variable depending on the conditions of use and the force with which the user operates the cursor 5 on the elastically yielding portion 7.

In addition, the linear guide 10 has second end-of-stroke means, not shown in the drawings that follow, which force the cursor 5 to move only within the ends of the grasping device 2. In this manner, an excessive thrust of the cursor 5 towards the end 4 of the first modular element 3 is prevented, thrust which could lead to an impediment to unlock the telescopic pole at a later time, or also to a break of the same.

For example, as shown in figure 1, the linear guide 10 comprises a thread, corresponding to a reverse thread 11 inside the cursor 5, of substantially tubular shape.

In this embodiment, the cursor 5 behaves as a screw nut around the grasping device 2, which acts as threaded pin: by rotating the cursor 5 in the direction (clockwise) of the arrow F, it moves vertically toward the elastically yielding portion 7 of the grasping device 2, compressing it; by rotating in the opposite direction (counterclockwise), it moves vertically in the opposite direction, releasing the aforesaid elastically yielding portion 7. Advantageously, the mechanical assembly 1 of the invention works in total absence of screws external to the two main components, the grasping device 2 and the cursor 5.

In particular, according to a preferred but not limitative example, the thread has a size ranging between 4 mm and 6 mm - for example 5 mm - and is quadruple-start, that is it presents a distance between a thread and the other equal to 1,5 mm and a profile of the thread equal to about 1.10 mm.

In the constructive solution illustrated in figures 1-4 attached, the cursor 5 presents in its outer surface a plurality of grooves 12, suitable to improve the grip by a user: by preferred but not binding way, the grooves 12 are overall in number of thirty.

Furthermore, in the area of the grasping device 2 ranging between the thread 11 and the elastically yielding portion 7, there is a groove 13 suitable to receive a seal preventing the entry of water inside the mechanical assembly 1 and the modular elements 3 and 6 to be connected.

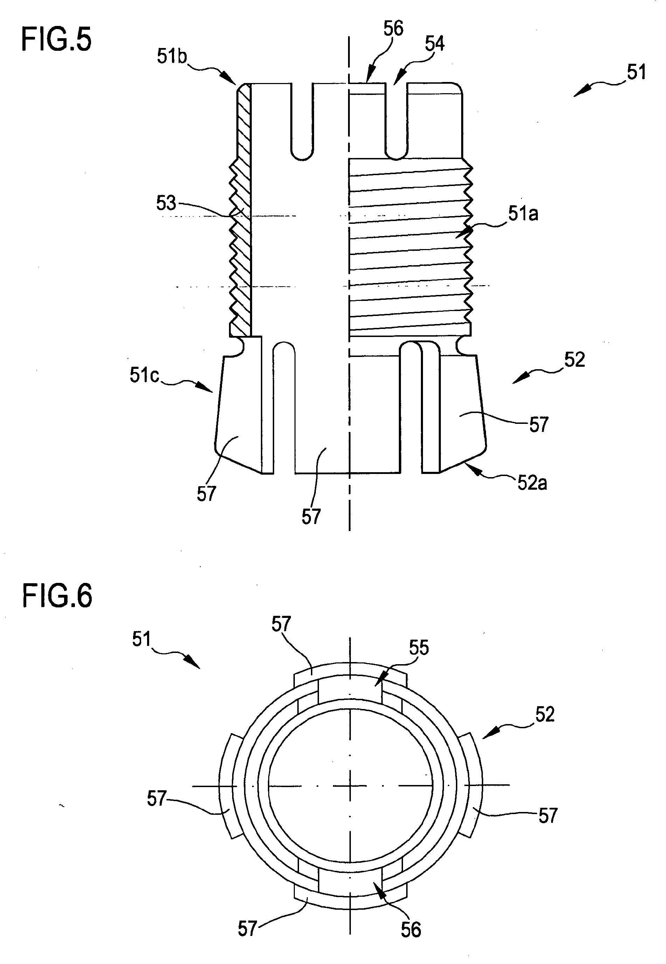

Figure 5 shows a first possible executive variant of the grasping device of the mechanical connection assembly of the invention, in this case not represented in all its essential components only for the sake of simplicity.

More specifically, the grasping device 51 of figure 5 differs from the grasping device 2 previously described in respect of the type of the first end-of-stoke means, as a whole now indicated with 54, of the linear guide 53 present on the outer surface 51a of the grasping device 51 itself.

Indeed, the first end-of-stroke means 54 comprise in this case a pair of shaped teeth 55, 56 diametrically opposite each other, visible in a complete manner in figure 6, projecting perpendicularly outwardly from the outer surface 51a of the grasping device 51 at an its first end 51b opposite to a second end 51c in which there is the elastically yielding portion 52. The shaped teeth 55, 56 contrast with the terminal annular edge of the screw nut of the cursor, not visible, when the elastically yielding portion 52 takes the rest position with the aim of releasing and make the modular elements movable each other.

It is understood that in alternative and optional embodiments of the mechanical connection assembly of the invention, not shown, the first end-of-stroke means could include a number of shaped teeth different from that one indicated above, this number being able to vary freely, depending on the constructive choices, starting from one.

Another technical and constructive feature that differentiates the grasping device 51 of this alternative embodiment of the mechanical assembly of the invention by the grasping device 2 of the mechanical assembly 1 previously described is related to the fact that, in this specific case, the elastically yielding portion 52 present a convex or rounded side edge 52a, rather than plane as in the example described above in relation to figures 1-4: this constructive trick advantageously allows to increase the capacity of the mechanical seal that the elastically yielding portion 52 itself exerts on the second element modular when it takes the operating position.

In particular, the convex side edge 52a is formed by the side edges of the four lobes 57 in which, preferably, the elastically yielding portion 52 is in this case uniformly divided.

As already mentioned, subject of the present invention is also a telescopic pole for practicing sport, spare time, hiking activities and the like, for simplicity not shown in its entirety in the attached figures, comprising a first modular element 3 and a second modular element 6 telescopically coupled each other.

Such a telescopic pole further comprises a mechanical assembly 1, suitable for the connection between the first modular element 3 and the second modular element 6, of the type described above both in constructional and functional terms.

Preferably, the first modular element 3 and the second modular element 6 which are connected by the mechanical assembly 1 of the invention are both tubular and properly present a glazed outer surface (with rough effect) in order to increase the grasping capacity or mechanical seal on them by, in particular, the cursor 5 of the mechanical connection assembly 1.

The modular elements tubular 3 and 6 also present minimal tolerances, in the order of 4 tenths of a millimeter just permitted by the particular mechanical connection assembly 1, applied externally to them, and not obtainable with the mechanical assemblies of known type, for example by the patent prior art FR984264 A, US2009/008213 A1 and FR2600197 A1. By virtue of the foregoing, it is understood, therefore, that the mechanical assembly for the connection between two modular elements of telescopic poles for practicing sport, spare time activities and the like, as well as the telescopic pole for practicing sport, spare time activities and the like using such a mechanical assembly, both object of the invention, achieve the purposes and reach the advantages already mentioned.

Upon implementation, changes could be made to the mechanical assembly of the invention consisting, for example, in linear guides different from those ones previously described, with reference to the aforesaid preferred embodiments.

Furthermore, other embodiments of the mechanical assembly claimed herein, not shown, could exist in which the mechanical assembly itself presents a construction concept different from that one obtainable from the attached figures, corresponding, for example, to a different shape of the cursor, which does not affect the advantage brought by the present invention. Moreover, in further embodiments of the invention, yet not shown, the telescopic pole for practicing sport, spare time, hiking activities and the like could include any number of modular elements, greater than two: in such a case, the number of mechanical assemblies for connecting these modular elements will vary accordingly.

It is, finally, clear that several other changes could be made to the mechanical connection assembly concerned, without departing from the principle of novelty intrinsic in the inventive idea expressed herein, as it is clear that, in the practical implementation of the invention, materials, shapes and sizes of the illustrated details could be changed, as needed, and replaced with others technically equivalent.

Where the constructive features and techniques mentioned in the following claims are followed by reference numbers or signs, those reference signs have been introduced with the sole objective of increasing the intelligibility of the claims themselves and therefore they have no limiting effect on the interpretation of each element identified, by way of example only, by these reference signs.

## Claims

1. Mechanical assembly (1) for the connection between a first modular element (3) and a second modular element (6) of telescopic poles for practicing sport, spare time activities and the like, said first modular element (3) having a first diameter (D1) and said second modular element (6) having a second diameter (D2), lower than said first diameter (D1) and being slidingly coupled with said first modular element (3) in such a way as to axially protrude from said first modular element (3) at an end (4) of said first modular element (3), said mechanical assembly (1) comprising:
- a grasping device (2; 51), fixed to said first modular element (3) at said end (4) and presenting on its outer surface (2a; 51a) a linear guide (10; 53) along which said cursor (5) slides;
- a cursor (5) operable by the user, axially movable along said first modular element (3) and cooperating with an elastically yielding portion (7; 52), belonging to said grasping device (2; 51) and protruding from said end (4) of said first modular element (3), in order to set said elastically yielding portion (7; 52) between a rest position, in which said elastically yielding portion (7; 52) is released and said second modular element (6) is free to slide with respect to said first modular element (3), and an operating position, in which said elastically yielding portion (7; 52) is compressed by said cursor (5) in such a way to block the movement of said second modular element (6) with respect to said first modular element (3),
**characterized in that** said linear guide (10; 53) presents first end-of-stroke means (54) for retaining said cursor (5) always at least partially superimposed on said grasping device (2; 51).

2. Mechanical assembly (1) according to claim 1) **characterized in that** said cursor (5) has an inner shape matching the outer shape of said grasping device (2; 51) when said elastically yielding portion (7; 52) assumes said operating position of work.

3. Mechanical assembly (1) according to any of the preceding claims **characterized in that** said elastically yielding portion (7; 52) comprises a plurality of lobes (8; 57), separated each other by at least one opening (9), in such a way that, in said operating position, said lobes (8; 57) can approach one to another, compressing around said second modular element (6).

4. Mechanical assembly (1) according to any of the preceding claims **characterized in that** said elastically yielding portion (7; 52) presents an outer wall (7a) arranged according to a sloped plane diverging outwardly starting from the linear axis (Y) defined by said modular elements (3, 6) and coinciding with that one defined by said grasping device (2; 51).

5. Mechanical assembly (1) according to any of the preceding claims **characterized in that** said elastically yielding portion (7; 52) of said grasping device (2; 51) presents an overall shape wider than the inner one of said cursor (5), so that said cursor (5) gradually compresses said elastically yielding portion (7; 52) as it approaches to said end (4) of said first modular element (3) in order to arrange said elastically yielding portion (7; 52) in said operating position.

6. Mechanical assembly (1) according to claim 5) **characterized in that** said overall shape of said elastically yielding portion (7; 52) is substantially frusto-conical, said outer wall (7a) being inclined of a first angle (α) with respect to the linear axis (Y) of said modular elements (3, 6) or said grasping device (2; 51), and said inner shape of said cursor (5) presents, with respect to said linear axis (Y) of said modular elements (3, 6), an inclination of the inner wall (5a) of a second angle (β) greater than said first angle (α).

7. Mechanical assembly according to any of the preceding claims **characterized in that** said elastically yielding portion (52) presents a convex side edge (52a) suitable to increase the capacity of mechanical seal which said elastically yielding portion (52) exerts on said second modular element when it assumes said operating position.

8. Mechanical assembly (1) according to claim 1) **characterized in that** said linear guide (10; 53) presents second end-of-stroke means which force said cursor (5) moving exclusively within the ends of said grasping device (2; 51).

9. Mechanical assembly (1) according to claim 1) or 8) **characterized in that** said linear guide (10; 53) comprises screw means, arranged partly in said cursor (5) and partly on said grasping device ( 2; 51), suitable to allow to set said elastically yielding portion (7; 52) between said rest position and said operating position by axial rotation.

10. Mechanical assembly (1) according to claim 9) **characterized in that** said screw means comprise a thread arranged on said grasping device (2; 51) and a corresponding reverse thread (11) arranged on the inner wall (5a) of said cursor (5).

11. Mechanical assembly (1) according to claim 10) **characterized in that** said thread is a quadruple-start.

12. Mechanical assembly (1) according to claim 11) or 12) **characterized in that** said thread presents a pitch size ranging between 4 mm and 6 mm.

13. Telescopic pole for practicing sport, spare time activities and the like comprising:
- a first modular element (3);
- a second modular element (6);
- a mechanical assembly (1) for the connection between said first modular element (3) and said second modular element (6),
said first modular element (3) having a first diameter (D1) and said second modular element (6) having a second diameter (D2), lower than said first diameter (D1) and being slidingly coupled with said first modular element (3) in such a way as to axially protrude from said first modular element (3) at one end (4) of said first modular element (3), said mechanical assembly (1) comprising:
a grasping device (2; 51), fixed to said first modular element (3) at said end (4) and presenting on its outer surface (2a; 51a) linear guide (10; 53) along which said cursor (5) slides;
- a cursor (5) operable by the user, axially movable along said first modular element (3) and cooperating with a elastically yielding portion (7; 52), belonging to said grasping device (2; 51) and protruding from said end (4) of said first modular element (3), in order to set said elastically yielding portion (7; 52) between a rest position, in which said elastically yielding portion (7, 52 ) is released and said second modular element (6) is free to slide with respect to said first modular element (3), and an operating position, in which said elastically yielding portion (7; 52) is compressed by said cursor (5) in such a way to block the movement of said second modular element (6) with respect to said first modular element (3).
**characterized in that** said linear guide (10; 53) presents first end-of-stroke means (54) for retaining said cursor (5) always at least partially superimposed on said grasping device (2; 51).

## Patentansprüche

1. Mechanische Anordnung (1) für die Verbindung zwischen einem ersten modularen Element (3) und einem zweiten modularen Element (6) von Teleskopstangen zum Ausüben von Sport, Freizeitaktivitäten und dergleichen, wobei das erste modulare Element (3) einen ersten Durchmesser (D1) aufweist und das zweite modulare Element (6) einen zweiten Durchmesser (D2) aufweist, der kleiner als der erste Durchmesser (D1) ist, und gleitend mit dem ersten modularen Element (3) gekoppelt ist, so dass es an einem Ende (4) des ersten modularen Elements (3) axial von dem ersten modularen Element (3) vorsteht, wobei die mechanische Anordnung (1) Folgendes umfasst:
- eine Griffvorrichtung (2; 51), die an dem Ende (4) am ersten modularen Element (3) befestigt ist und auf ihrer Außenfläche (2a; 51a) eine Linearführung (10; 53) aufweist, entlang derer ein Läufer (5) gleitet,
- den Läufer (5), der durch den Benutzer betätigbar ist, welcher entlang dem ersten modularen Element (3) axial beweglich ist und mit einem elastisch nachgiebigen Abschnitt (7; 52) zusammenwirkt, der zur Griffvorrichtung (2; 51) gehört, und von dem Ende (4) des ersten modularen Elements (3) vorsteht, um den elastisch nachgiebigen Abschnitt (7; 52) zwischen einer Ruheposition, in der der elastisch nachgiebige Abschnitt (7; 52) freigegeben ist und das zweite modulare Element (6) frei in Bezug auf das erste modulare Element (3) gleiten kann, und einer Betätigungsposition, in der der elastisch nachgiebige Abschnitt (7; 52) so durch den Läufer (5) komprimiert wird, dass die Bewegung des zweiten modularen Elements (6) in Bezug auf das erste modulare Element (3) blockiert wird, zu setzen,
**dadurch gekennzeichnet, dass** die Linearführung (10; 53) erste Endlagenanschlagmittel (54) aufweist, um den Läufer (5) stets zumindest teilweise der Griffvorrichtung (2; 51) überlagert zu halten.

2. Mechanische Anordnung (1) nach Anspruch 1, **dadurch gekennzeichnet, dass** der Läufer (5) eine innere Form aufweist, die mit der äußeren Form der Griffvorrichtung (2; 51) zusammenpasst, wenn der elastisch nachgiebige Abschnitt (7; 52) die Betriebsposition annimmt.

3. Mechanische Anordnung (1) nach einem der vorhergehenden Ansprüche, **dadurch gekennzeichnet, dass** der elastisch nachgiebige Abschnitt (7; 52) mehrere Lappen (8; 57) umfasst, die voneinander durch wenigstens eine Öffnung (9) getrennt sind, so dass die Lappen (8; 57) einander in der Betriebsposition nähern können, wobei sie um das zweite modulare Element (6) komprimiert werden.

4. Mechanische Anordnung (1) nach einem der vorhergehenden Ansprüche, **dadurch gekennzeichnet, dass** der elastisch nachgiebige Abschnitt (7; 52) eine Außenwand (7a) aufweist, die entsprechend einer geneigten Ebene angeordnet ist, welche beginnend an der linearen Achse (Y), welche durch die modularen Elemente (3, 6) definiert ist, nach außen divergiert und mit jener zusammenfällt, die durch die Griffvorrichtung (2; 51) definiert ist.

5. Mechanische Anordnung (1) nach einem der vorhergehenden Ansprüche, **dadurch gekennzeichnet, dass** der elastisch nachgiebige Abschnitt (7; 52) der Griffvorrichtung (2; 51) eine Gesamtform aufweist, die breiter ist als der innere Teil des Läufers (5), so dass der Läufer (5) den elastisch nachgiebigen Abschnitt (7; 52) allmählich komprimiert, wenn er sich dem Ende (4) des ersten modularen Elements (3) nähert, um den elastisch nachgiebigen Abschnitt (7; 52) in der Betriebsposition anzuordnen.

6. Mechanische Anordnung (1) nach Anspruch 5, **dadurch gekennzeichnet, dass** die Gesamtform des elastisch nachgiebigen Abschnitts (7; 52) im Wesentlichen kegelstumpfförmig ist, wobei die Außenwand (7a) unter einem ersten Winkel (α) in Bezug auf die lineare Achse (Y) der modularen Elemente (3, 6) oder der Griffvorrichtung (2; 51) geneigt ist und die innere Form des Läufers (5) in Bezug auf die lineare Achse (Y) der modularen Elemente (3, 6) eine Neigung der Innenwand (5a) mit einem zweiten Winkel (β), der größer als der erste Winkel (α) ist, aufweist.

7. Mechanische Anordnung nach einem der vorhergehenden Ansprüche, **dadurch gekennzeichnet, dass** der elastisch nachgiebige Abschnitt (52) eine konvexe Seitenkante (52a) aufweist, die dafür geeignet ist, die Kapazität der mechanischen Dichtung zu erhöhen, welche der elastisch nachgiebige Abschnitt (52) auf das zweite modulare Element ausübt, wenn er die Betriebsposition annimmt.

8. Mechanische Anordnung (1) nach Anspruch 1, **dadurch gekennzeichnet, dass** die Linearführung (10; 53) zweite Endlagenanschlagmittel aufweist, welche den Läufer (5) dazu zwingen, sich ausschließlich innerhalb der Enden der Griffvorrichtung (2; 51) zu bewegen.

9. Mechanische Anordnung (1) nach Anspruch 1 oder 8, **dadurch gekennzeichnet, dass** die Linearführung (10; 53) Schraubmittel umfasst, die teilweise in dem Läufer (5) und teilweise auf der Griffvorrichtung (2; 51) angeordnet sind, welche geeignet sind, um es zu ermöglichen, den elastisch nachgiebigen Abschnitt (7; 52) durch axiale Drehung zwischen der Ruheposition und der Betriebsposition einzustellen.

10. Mechanische Anordnung (1) nach Anspruch 9, **dadurch gekennzeichnet, dass** die Schraubmittel ein Gewinde, das an der Griffvorrichtung (2; 51) angeordnet ist, und ein entsprechendes Gegengewinde (11), das an der Innenwand (5a) des Läufers (5) angeordnet ist, umfassen.

11. Mechanische Anordnung (1) nach Anspruch 10, **dadurch gekennzeichnet, dass** das Gewinde ein Quadrupel-Start ist.

12. Mechanische Anordnung (1) nach Anspruch 11 oder 12, **dadurch gekennzeichnet, dass** das Gewinde einen Steigungsbetrag aufweist, der zwischen 4 mm und 6 mm liegt.

13. Teleskopstange zum Ausüben von Sport, Freizeitaktivitäten und dergleichen, welche Folgendes umfasst:
- ein erstes modulares Element (3),
- ein zweites modulares Element (6),
- eine mechanische Anordnung (1) für die Verbindung zwischen dem ersten modularen Element (3) und dem zweiten modularen Element (6),
wobei das erste modulare Element (3) einen ersten Durchmesser (D1) aufweist und das zweite modulare Element (6) einen zweiten Durchmesser (D2) aufweist, der kleiner als der erste Durchmesser (D1) ist, und gleitend mit dem ersten modularen Element (3) gekoppelt ist, so dass es an einem Ende (4) des ersten modularen Elements (3) axial von dem ersten modularen Element (3) vorsteht, wobei die mechanische Anordnung (1) Folgendes umfasst:
- eine Griffvorrichtung (2; 51), die an dem Ende (4) am ersten modularen Element (3) befestigt ist und auf ihrer Außenfläche (2a; 51a) eine Linearführung (10; 53) aufweist, entlang derer der Läufer (5) gleitet,
- einen Läufer (5), der durch den Benutzer betätigbar ist, welcher entlang dem ersten modularen Element (3) axial beweglich ist und mit einem elastisch nachgiebigen Abschnitt (7; 52) zusammenwirkt, der zur Griffvorrichtung (2; 51) gehört, und von dem Ende (4) des ersten modularen Elements (3) vorsteht, um den elastisch nachgiebigen Abschnitt (7; 52) zwischen einer Ruheposition, in der der elastisch nachgiebige Abschnitt (7; 52) freigegeben ist und das zweite modulare Element (6) frei in Bezug auf das erste modulare Element (3) gleiten kann, und einer Betätigungsposition, in der der elastisch nachgiebige Abschnitt (7; 52) so durch den Läufer (5) komprimiert wird, dass die Bewegung des zweiten modularen Elements (6) in Bezug auf das erste modulare Element (3) blockiert wird, zu setzen,
**dadurch gekennzeichnet, dass** die Linearführung (10; 53) erste Endlagenanschlagmittel (54) aufweist, um den Läufer (5) stets zumindest teilweise der Griffvorrichtung (2; 51) überlagert zu halten.

## Revendications

1. Ensemble mécanique (1) pour le raccordement entre un premier élément modulaire (3) et un second élément modulaire (6) de montants télescopiques pour pratiquer un sport, des activités de temps libre et similaires, ledit premier élément modulaire (3) ayant un premier diamètre (D1) et ledit second élément modulaire (6) ayant un second diamètre (D2), inférieur audit premier diamètre (D1), et étant accouplé de façon coulissante audit premier élément modulaire (3) de manière à faire axialement saillie à partir dudit premier élément modulaire (3) à une extrémité (4) dudit premier élément modulaire (3), ledit ensemble mécanique (1) comprenant :
- un dispositif de prise (2 ; 51), fixé audit premier élément modulaire (3) à ladite extrémité (4) et présentant sur sa surface extérieure (2a ; 51a) un guide linéaire (10 ; 53) le long duquel coulisse ledit curseur (5) ;
- un curseur (5) actionnable par l'utilisateur, déplaçable axialement le long dudit premier élément modulaire (3) et coopérant avec une partie à déformation élastique (7 ; 52), appartenant audit dispositif de prise (2 ; 51) et faisant saillie à partir de ladite extrémité (4) dudit premier élément modulaire (3), afin de placer ladite partie à déformation élastique (7 ; 52) entre une position de repos, dans laquelle ladite partie à déformation élastique (7 ; 52) est relâchée et ledit second élément modulaire (6) est libre de coulisser par rapport audit premier élément modulaire (3), et une position de fonctionnement, dans laquelle ladite partie à déformation élastique (7 ; 52) est comprimée par ledit curseur (5) de manière à bloquer le mouvement dudit second élément modulaire (6) par rapport audit premier élément modulaire (3),
**caractérisé par le fait que** ledit guide linéaire (10 ; 53) présente des premiers moyens de fin de course (54) pour retenir ledit curseur (5) toujours superposé au moins partiellement sur ledit dispositif de prise (2 ; 51).

2. Ensemble mécanique (1) selon la revendication 1, **caractérisé par le fait que** ledit curseur (5) a une forme intérieure correspondant à la forme extérieure dudit dispositif de prise (2 ; 51) lorsque ladite partie à déformation élastique (7 ; 52) adopte ladite position de fonctionnement.

3. Ensemble mécanique (1) selon l'une quelconque des revendications précédentes, **caractérisé par le fait que** ladite partie à déformation élastique (7 ; 52) comprend une pluralité de lobes (8 ; 57), séparés les uns des autres par au moins une ouverture (9), de telle sorte que, dans ladite position de fonctionnement, lesdits lobes (8 ; 57) peuvent se rapprocher l'un de l'autre, comprimant autour dudit second élément modulaire (6).

4. Ensemble mécanique (1) selon l'une quelconque des revendications précédentes, **caractérisé par le fait que** ladite partie à déformation élastique (7 ; 52) présente une paroi extérieure (7a) agencée suivant un plan incliné s'écartant vers l'extérieur à partir de l'axe linéaire (Y) défini par lesdits éléments modulaires (3, 6) et coïncidant avec celui défini par ledit dispositif de prise (2 ; 51).

5. Ensemble mécanique (1) selon l'une quelconque des revendications précédentes, **caractérisé par le fait que** ladite partie à déformation élastique (7 ; 52) dudit dispositif de prise (2 ; 51) présente une forme globale plus grande que la forme intérieure dudit curseur (5), de telle sorte que ledit curseur (5) comprime progressivement ladite partie à déformation élastique (7 ; 52) lorsqu'il approche de ladite extrémité (4) dudit premier élément modulaire (3) afin de placer ladite partie à déformation élastique (7 ; 52) dans ladite position de fonctionnement.

6. Ensemble mécanique (1) selon la revendication 5, **caractérisé par le fait que** ladite forme globale de ladite partie à déformation élastique (7 ; 52) est sensiblement tronconique, ladite paroi extérieure (7a) étant inclinée d'un premier angle (α) par rapport à l'axe linéaire (Y) desdits éléments modulaires (3, 6) ou dudit dispositif de prise (2 ; 51), et ladite forme intérieure dudit curseur (5) présente, par rapport audit axe linéaire (Y) desdits éléments modulaires (3, 6), une inclinaison de la paroi intérieure (5a) d'un second angle (β) supérieur audit premier angle (α).

7. Ensemble mécanique selon l'une quelconque des revendications précédentes, **caractérisé par le fait que** ladite partie à déformation élastique (52) présente un bord latéral convexe (52a) approprié pour augmenter la capacité d'étanchéité mécanique que la partie à déformation élastique (52) exerce sur ledit second élément modulaire lorsqu'elle adopte ladite position de fonctionnement.

8. Ensemble mécanique (1) selon la revendication 1, **caractérisé par le fait que** ledit guide linéaire (10 ; 53) présente des seconds moyens de fin de course qui forcent ledit curseur (5) à se déplacer exclusivement dans les limites des extrémités dudit dispositif de prise (2 ; 51).

9. Ensemble mécanique (1) selon la revendication 1 ou la revendication 8, **caractérisé par le fait que** ledit guide linéaire (10 ; 53) comprend des moyens de vis, agencés en partie dans ledit curseur (5) et en partie sur ledit dispositif de prise (2 ; 51), appropriés pour autoriser le placement de ladite partie à déformation élastique (7 ; 52) entre ladite position de repos et ladite position de fonctionnement par rotation axiale.

10. Ensemble mécanique (1) selon la revendication 9, **caractérisé par le fait que** lesdits moyens de vis comprennent un filetage agencé sur ledit dispositif de prise (2 ; 51) et un filetage inversé correspondant (11) agencé sur la paroi intérieure (5a) dudit curseur (5).

11. Ensemble mécanique (1) selon la revendication 10, **caractérisé par le fait que** ledit filetage est un filetage à filets quadruples.

12. Ensemble mécanique (1) selon la revendication 11 ou la revendication 12, **caractérisé par le fait que** ledit filetage présente une dimension de pas compris entre 4 mm et 6 mm.

13. Montant télescopique pour pratiquer un sport, des activités de temps libre et similaires, comprenant :
- un premier élément modulaire (3) ;
- un second élément modulaire (6) ;
- un ensemble mécanique (1) pour le raccordement entre ledit premier élément modulaire (3) et ledit second élément modulaire (6),
ledit premier élément modulaire (3) ayant un premier diamètre (D1) et ledit second élément modulaire (6) ayant un second diamètre (D2), inférieur audit premier diamètre (D1), et étant accouplé de façon coulissante audit premier élément modulaire (3) de manière à faire axialement saillie à partir dudit premier élément modulaire (3) à une extrémité (4) dudit premier élément modulaire (3), ledit ensemble mécanique (1) comprenant :
- un dispositif de prise (2 ; 51), fixé audit premier élément modulaire (3) à ladite extrémité (4) et présentant sur sa surface extérieure (2a ; 51a) un guide linéaire (10 ; 53) le long duquel coulisse ledit curseur (5) ;
- un curseur (5) actionnable par l'utilisateur, déplaçable axialement le long dudit premier élément modulaire (3) et coopérant avec une partie à déformation élastique (7 ; 52), appartenant audit dispositif de prise (2 ; 51) et faisant saillie à partir de ladite extrémité (4) dudit premier élément modulaire (3), afin de placer ladite partie à déformation élastique (7 ; 52) entre une position de repos, dans laquelle ladite partie à déformation élastique (7 ; 52) est relâchée et ledit second élément modulaire (6) est libre de coulisser par rapport audit premier élément modulaire (3), et une position de fonctionnement, dans laquelle ladite partie à déformation élastique (7 ; 52) est comprimée par ledit curseur (5) de manière à bloquer le mouvement dudit second élément modulaire (6) par rapport audit premier élément modulaire (3),
**caractérisé par le fait que** ledit guide linéaire (10 ; 53) présente des premiers moyens de fin de course (54) pour retenir ledit curseur (5) toujours superposé au moins partiellement sur ledit dispositif de prise (2 ; 51).
